# EUROPEAN PATENT SPECIFICATION

(11) **EP 2 713 009 B1**
(45) Date of publication and mention of the grant of the patent: **11.03.2015**
(21) Application number: 12186156.1
(22) Date of filing: 26.09.2012
(51) Int. Cl.: F01D 5/18, F01D 5/22, F01D 5/08, F01D 11/10

(54) **Cooling method and system for cooling blades of at least one blade row in a rotary flow machine**
Kühlverfahren und -system zur Kühlung von Schaufeln mindestens einer Schaufelreihe in einer drehenden Strömungsmaschine
Procédé et système de refroidissement pour refroidir des aubes d'au moins une rangée d'aubes dans une turbomachine rotative

(43) Date of publication of application: 02.04.2014
(73) Proprietor: ALSTOM Technology Ltd, 5400 Baden (CH)
(72) Inventor: Justl, Sascha, 8064 Zürich (CH); Simon-Delgado, Carlos, 5400 Baden (CH); Heidecke, Axel, 5430 Wettingen (CH); Olmes, Sven, 5210 Windisch (CH)

(56) References cited:
- EP-A1- 1 591 626
- EP-A1- 2 390 466
- US-A- 2 963 268
- US-A- 4 580 943

## Description

### Technical Field

The present invention relates to a method as well to a cooling system for cooling blades of at least one blade row in a rotary flow machine, like a gas or steam turbo machine or a compressor unit, comprising an axial flow channel, which is radially limited on the inside by a rotor unit and at the outside by at least one stationary component, said blades are arranged at the rotary unit and provide a shrouded blade tip facing radially to said stationary component.

### Background of the Invention

It is a common used technique for increasing engine efficiency and performance to cool heat exposed components of rotary flow machines. Especially cooling of turbine blades in gas or steam turbo engines is of high importance to operate such turbines at higher temperatures than would be permissible with uncooled turbine blades.

A well known cooling technique for the rotating blades in a rotary flow machine is based on feeding the blades via the rotating unit providing internal cooling channels which are indirectly or directly fluidly connected with a cooling channel system inside the blades.

US 4,178,129 discloses a gas turbine engine cooling system in which each blade roots is provided with individual pitot receivers which collect a portion of a cooling flow supplied from an annular array of pre-swirl nozzles, which have a circumferentially continuous outlet flow area and direct said cooling flow into a portion only of the interior of the blade, preferably adjacent the leading edge.

Another cooling arrangement for a bladed rotary in a gas turbine engine is disclosed in US 5,984,636. Each of the blades includes cooling air passages and a cover with curved fins mounted adjacent to but connected to the rotor and spaced apart slightly from the rotor disc to form a passage way for the cooling fluid. The cavity which is bordered by the cover and the rotor disc is fed on a relative low radius and the pressure rise is achieved with vanes working like a radial compressor. Complicated design making a separate part attached to the rotor necessary.

Further cooling arrangements/methods for gas turbines or other rotary flow machines are disclosed in documents US 2,963,268, US 4,580,943, or the applicant's EP 2 390 466 A1 and EP 1 591 626 A1. These documents describe for example that pressurized cooling air is fed from radially outside towards the tip of the blades.

A multitude of further solutions are well known for feeding blades with cooling air via rotor bores, these solutions however might cause life time problems because if there is not enough space for feeding cooling air into the rotating blades pressure will rise and might not be sufficient finally.

### Summary of the Invention

It is a general object of the present invention to provide a method as well a cooling system for cooling blades of at least one blade row in a rotary flow machine which simplifies feeding of cooling air into the rotating blades of the rotary flow machine.

The object is achieved by the method given in claim 1. An inventive cooling system is disclosed in claim 4. The invention can be modified advantageously by the features disclosed in the sub claims as well in the following description especially referring to the preferred embodiment.

The invention is used for providing cooling air for an internal cooled rotating turbine blade and is based on the idea to feed the internal blade cooling system via the tip of each blade within at least one blade row of the rotary flow machine. Therefore, the inventive method for cooling blades of at least one blade row in a rotary flow machine, comprising an axial flow channel which is radially limited on the inside by rotor unit and at the outside by at least one stationary component, said blade being arranged at the rotary unit and providing a shrouded blade tip facing radially to said stationary component, wherein pressurized cooling air is fed through from radially outside towards the tip of each of said blades in the at least one blade row, is characterized in that said pressurized cooling air enters the blades through at least one opening at the shrouded blades' tip.

An important aspect for realizing feeding the internal blade cooling system via the tip of each blade is to ensure that no hot gas can enter the internal blade cooling system via openings at the shrouded blades' tip. To comply with this requirement it is necessary to ensure that the immediate area around the at least one opening at the shrouded blades tip is supplied with cooling air at a preferably low temperature and a static pressure with is higher than the total relative pressure of the hot gas inside the axial flow channel especially at the blade leading edge.

In a preferred embodiment the pressurized cooling air is fed through the stationary components surrounding said at least one blade row radially and entering a cavity enclosed by the stationary component and shrouded tips of the blades in the at least one blade row. The shroud of each blade provides at its upstream and downstream edge relative to the flow direction through the axial flow channel of the rotary flow machine at least one fin which arise radially beyond a shroud surface extending between the at least two fins. Such shrouded tips of the blades are designed and arranged in a manner that shrouds of two neighboring blades adjoin each other in a circumferential direction, so that the shrouds of all blades in the at least one blade row combine to form a radially outward directed annular shaped inter fin cavity bordered radially by the stationary component. It is possible also to provide more than two fins at a shroud for forming more than one inter fin cavity the following explanations are directed to shrouded blades having one inter fin cavity without limiting the scope of the invention. The inter fin cavity which is enclosed by all shrouded blades within one blade row has the shape of an annulus which is fed by at least one opening in the stationary component with cooling air so that a static pressure prevails inside the inter fin cavity which is at least slightly higher than the pressure in the axial flow channel of the rotary flow machine.

Since the blades rotate around an axis of rotation of the rotary flow machine the cooling air inside the annulus is entrained in direction of rotation. To enhance the inflow of cooling air into the opening at the shroud of each blade the entrance opening has a special opening contour through which the flow of cooling air in the annulus is decelerated locally relative to the shrouds. This can be achieved by shaping the opening of each shroud like a funnel having a funnel shaped cross-section with an assigned funnel axis tending into circumferential direction of rotation. In addition the opening contour provides an extension in axial, radial and circumferential direction such that a flow cross-section of said aperture becomes larger in flow direction of the cooling air when entering the aperture.

The inventive cooling system for cooling blades of at least one blade row in a rotary flow machine provides therefore at least one opening at the stationary component facing radially towards the shrouded tips of the blades of the at least one blade row. Further the at least one opening is an exit aperture of a cooling channel inside the stationary component. The inventive cooling system is characterized in that each of the blades provides at least one aperture at its shrouded blade tip whereby the aperture is an entrance port of a cooling channel inside the blade. In a preferred embodiment the cooling air will be provided by a compressor unit which is typical part of a gas or steam turbine arrangement.

### Brief Description of the Figures

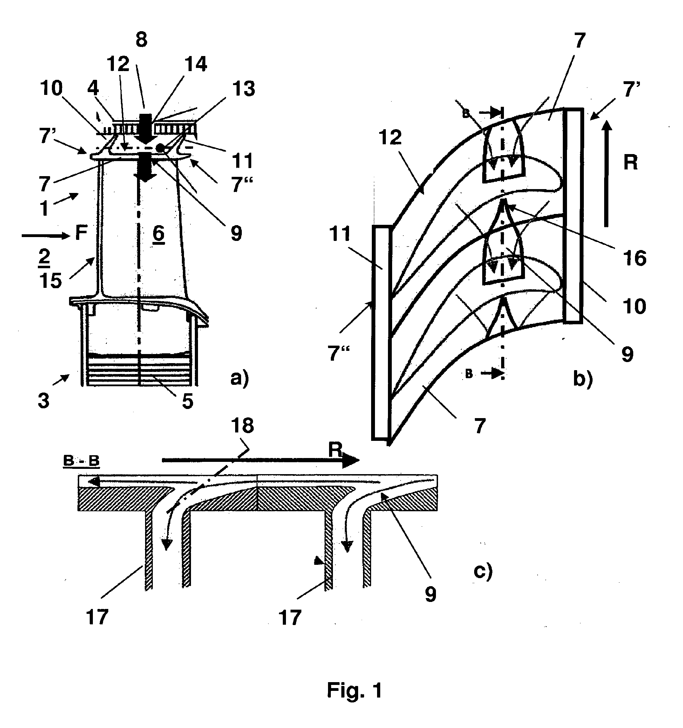

The invention shall subsequently be explained in more detail based on exemplary embodiment in conjunction with the drawing. The drawing
- Fig. 1a: shows a side view of a blade inside a rotary flow machine,
- Fig. 1b: shows a schematically top view of two shrouded blade tips within one blade row and
- Fig. 1c: shows a sectional view along cut line BB through the head part of to neighboring shrouded blades in circumferential direction of a blade row.

### Detailed Description of exemplary Embodiment

Figure 1 shows a side view of a blade 1 mounted in a blade row of a rotary flow machine. The rotary flow machine comprises a flow channel 2 which is radially limited on the inside by rotor unit 3 and the outside by at least one stationary component 4. Typically the stationary component 4 is a heat shield component which is mounted at the inner wall of a casing surrounding said rotary flow machine. Each blade 1 of the blade row comprises a shovel foot 5 which is detachably connected to the rotor unit 3, an air foil 6 extending radially through the axial flow channel 2 and being exposed to the hot gas flow passing the axial flow channel, and finally a shroud 7 at the blade tip's end.

For cooling purpose of the blade 1 it is inventively suggested to feed cooling air 8 radially outward from the stationary component into the blade 1 through an opening 9 at the shrouded blade tip. By radial cooling air supply to the blade 1 from radially outside through at least one stationary component 4 complex designed cooling channels inside the rotor unit, as described above, can be avoided. The cooling air supply to the stationary component 4 can be designed and arranged very easy so that constructive and financial expense for realizing cooling of the blades 1 can be reduced significantly.

To ensure that no hot gases will enter the opening 9 of the cooling channel inside the blade 1 the shroud 7 provides an upstream edge 7' and a downstream edge 7" relative to the axial flow direction through the axial flow channel 2 illustrate by the arrow F in figure 1 a which is directed from the left to the right. Along the upstream edge 7' a first fin 10 and along the downstream edge 7" a second fin 11 are arranged, both fins 10, 11 arise radially beyond the shroud surface 12 extending between both of fins 10, 11. Due to the shroud design and the arrangement of the blade 1 relative to the stationary component 4 the shroud 7 encloses an inter fin cavity 13 together with the stationary component 4 into which cooling air 8 is fed through the opening 14 of the stationary component which is an exit port of a cooling channel system inside the stationary component not shown. The pressurized cooling air 8 is fed into the inter fin cavity 13 such that a static pressure previous within said cavity 13 is higher than a total relative pressure of flow in the axial flow channel 2 at a leading edge 15 of the blade 1 in the at least one blade row. In this way it can be avoided that hot gases can enter the inter fin cavity 13.

The at least one opening 14 inside the stationary component 4 is arranged in radially projection to the shrouded blade tips and the number of such openings 14 depends on the desired cooling effect in the blades. If the cooling air supply cannot be met by just one opening more openings can be arranged in circumferential direction around the blade row inside the stationary component.

Figure 1b shows a schematically top view on two neighboring shrouded blade tips with an indicated profile of the airfoil of each blade. Each shroud 7 provides an upstream edge 7' along which fin 10 and an downstream edge 7" along which fin 11 are arranged each extending beyond the shroud surface 12 extending axially between both fins 10, 11. In figure 1b it is assumed that the fins 10, 11 arise beyond the drawing plain.

Further it is shown that the shrouds 7 of two neighboring blades adjoin each other in the circumferential direction R which corresponds to the movement of rotation of the rotary flow machine, so that the shrouds 7 of all blades in the at least one blade row combine to form a radially outwardly directed annular shaped inter fin cavity 13 which is seen in fig. 1b from the top view.

Each blade provides at its shroud 7 at least one opening 9 at the shroud surface 12 which is an entrance port of a cooling channel 17 inside the blade 1. See also fig. 1c which shows a sectional view along a cut line BB as indicated in fig. 1b. Each opening 9 has an overlap to at least one neighboring shroud and provides an opening contour having an extension in axial and in circumferential direction such that in radial protection onto the shroud 7 as illustrated in fig. 1b, the aperture 9 corresponds to a bottle neck shape with a smallest axial width 16 directed in circumferential direction of rotation R. Such shape of aperture sustains an inflow of cooling medium into the cooling channel 17 of the blade 1. Especially the cross section design of each aperture 9 which is illustrated in fig. 1c supports an inflow of cooling air into the cooling channel 17, due to a funnel shaped cross section in radially and circumferentially direction of the opening contour of the opening 9 which has a funnel axis 18 tending into circumferential direction R of rotation.

As indicated In fig. 1 a the top of each fin 10, 11 is arranged very close to the inner surface of the stationary part 4 which is, as explained before a heat shield component preferably, so that a leakage of cooling air escaping from the inter fin cavity 13 into the flow path 2 can be reduced significantly. In preferred embodiment the fins 10, 11 and the heat shield component are arranged and designed to realize a labyrinth sealing.

### List of reference signs

- 1: blade
- 2: axial flow channel
- 3: rotor unit
- 4: stationary component
- 5: shovel root
- 6: air foil
- 7: shroud
- 7': upstream edge
- 7": downstream edge
- 8: cooling air
- 9: opening, aperture
- 10, 11: fin
- 12: shroud surface
- 13: inter fin cavity
- 14: opening
- 15: leading edge
- 16: opening, aperture
- 17: cooling channel
- 18: funnel axis

## Claims

1. Method for cooling blades (1) of at least one blade row in a rotary flow machine, comprising an axial flow channel (2) which is radially limited on the inside by a rotor unit (3) and at the outside by at least one stationary component (4), said blades (1) being arranged at the rotary unit (3) and providing a shrouded blade tip facing radially to said stationary component (4), wherein pressurized cooling air (8) is fed through from radially out-side towards the tip of each of said blades (1) in the at least one blade row, **characterized In that** said pressurized cooling air (8) enters the blades (1) through at least one opening (9) at the shrouded blades' tip.

2. Method according to claim 1, **characterized in that** the pressurized cooling air (8) is fed through the stationary component (4) surrounding said at least one blade row radially and entering a cavity (13) enclosed by the stationary component (4) and shrouded tips of the blades (1) in the at least one blade row.

3. Method according to claim 2, **characterized in that** the pressurized cooling air (8) is fed into the cavity (13) through at least one, stationary component (4) sided opening (14) such that a static pressure prevails within said cavity (13) which is higher than a total relative pressure of a flow in the axial flow channel (2) at a leading edge (15) of the blades (1) in the at least one blade row.

4. Cooling system for cooling blades (1) of at least one blade row in a rotary flow machine comprising an axial flow channel (2) which is radially limited on the inside by a rotor unit (3) and at the outside by at least one stationary component (4), said blades (1) being arranged at the rotary unit (3) and providing a shrouded blade tip facing radially to said stationary component (4), and at least one opening (14) being arranged at the stationary component (4) facing radially towards the shrouded tips of the blades (1) of the at least one blade row, said at least one opening (14) being an exit port of a cooling channel inside the stationary component (4), **characterized in that** each of the blades (1) provides at least one aperture (9) at its shrouded blade tip, and said aperture (9) is an entrance port of a cooling channel (17) inside the blade (1).

5. Cooling system according to claim 4, **characterized in that** the shrouded tips of the blades (1) are designed and arranged such that the shroud (7) of each blade (1) provides an upstream and a downstream edge (7', 7") relative to an axial flow direction (F) through said axial flow channel (2) of the rotary flow machine, and along said up- and downstream edge (7', 7") at least one fin (10,11) is arranged arising radially beyond a shroud surface (12) extending between both fins (10, 11).

6. Cooling system according to claim 5, **characterized in that** the shrouded tips of the blades (1) are designed and arranged such that shrouds (7) of two neighbouring blades (1) adjoin each other in a circumferential direction, so that the shrouds (7) of all blades (1) in the at least one blade row combine to form at least one a radially outwardly directed annular shaped inter fin cavity (13) bordered radially by the stationary component (4).

7. Cooling system according to claim 5 or 6, **characterized in that** the opening contour of the aperture (9) provides a funnel shaped cross-section in radially and circumferentially direction, said funnel shaped cross-section has an assigned funnel axis (18) tending into circumferential direction of rotation.

8. Cooling system according to claim 7, **characterized in that** each aperture (9) of the shrouded blade tip provides an opening contour having an extension in axial, radial and circumferential direction such that a flow cross-section of said aperture (9) becomes larger In flow direction of the cooling air entering the aperture (9).

9. Cooling system according to claim 7 or 8, **characterized in that** the opening contour of each aperture (9) extends between two or more neighbouring blades.

10. Cooling system according to one of the claims 4 to 9, **characterized in that** the exit port of the at least one opening has an assigned axis which is orientated radially.

11. Cooling system according to one of the claims 4 to 10, **characterized in that** the rotary flow machine is a gas or steam turbo machine or a compressor unit.

## Patentansprüche

1. Verfahren zur Kühlung von Schaufeln (1) mindestens einer Schaufelreihe in einer drehenden Strömungsmaschine, die einen axial durchströmten Kanal (2) umfasst, der auf der Innenseite durch eine Läufereinheit (3) und auf der Außenseite durch mindestens eine stationäre Komponente (4) radial begrenzt wird, wobei die Schaufeln (1) an der Läufereinheit (3) angeordnet sind und eine mit Deckband versehene Schaufelspitze bereitstellen, die radial zu der stationären Komponente (4) weist, wobei mit Druck beaufschlagte Kühlluft (8) von radial außen zu der Spitze jeder der Schaufeln (1) in der mindestens einen Schaufelreihe geführt wird, **dadurch gekennzeichnet, dass** die druckbeaufschlagte Kühlluft (8) durch mindestens eine Öffnung (9) an der mit Deckband versehenen Spitze in die Schaufeln (1) eintritt.

2. Verfahren nach Anspruch 1, **dadurch gekennzeichnet, dass** die mit Druck beaufschlagte Kühlluft (8) radial durch die die mindestens eine Schaufelreihe umgebende stationäre Komponente (4) geführt wird und in einen Hohlraum (13) eintritt, der durch die stationäre Komponente (4) und die mit Deckband versehenen Spitzen der Schaufeln (1) in der mindestens einen Schaufelreihe umschlossen wird.

3. Verfahren nach Anspruch 2, **dadurch gekennzeichnet, dass** die mit Druck beaufschlagte Kühlluft (8) durch mindestens eine Öffnung (14) auf der Seite der stationären Komponente (4) in den Hohlraum (13) geführt wird, so dass in dem Hohlraum (13) ein statischer Druck vorherrscht, der höher ist als ein Gesamtrelativdruck eines Stroms in dem axial durchströmten Kanal (2) an einer Eintrittskante (15) der Schaufeln (1) in der mindestens einen Schaufelreihe.

4. Kühlsystem zur Kühlung von Schaufeln (1) mindestens einer Schaufelreihe in einer drehenden Strömungsmaschine, die einen axial durchströmten Kanal (2) umfasst, der auf der Innenseite durch eine Läufereinheit (3) und auf der Außenseite durch mindestens eine stationäre Komponente (4) radial begrenzt wird, wobei die Schaufeln (1) an der Läufereinheit (3) angeordnet sind und eine mit Deckband versehene Schaufelspitze bereitstellen, die radial zu der stationären Komponente (4) weist, und wobei mindestens eine Öffnung (14) an der stationären Komponente (4) angeordnet ist, die zu den mit Deckband versehenen Spitzen der Schaufeln (1) der mindestens einen Schaufelreihe weist, wobei die mindestens eine Öffnung (14) ein Austrittsdurchlass eines Kühlkanals in der stationären Komponente (4) ist, **dadurch gekennzeichnet, dass** jede der Schaufeln (1) an ihrer mit Deckband versehenen Spitze mindestens einen Durchlass (9) bereitstellt und der Durchlass (9) ein Eingangsdurchtritt eines Kühlkanals (17) in der Schaufel (1) ist.

5. Kühlsystem nach Anspruch 4, **dadurch gekennzeichnet, dass** die mit Deckband versehenen Spitzen der Schaufeln (1) so ausgeführt und angeordnet sind, dass das Deckband (7) jeder Schaufel (1) eine stromaufwärtige und eine stromabwärtige Kante (7', 7") bezüglich einer axialen Strömungsrichtung (F) durch den axial durchströmten Kanal (2) der drehenden Strömungsmaschine bereitstellt, und entlang der stromaufwärtigen- und stromabwärtigen Kante (7', 7") mindestens eine Rippe (10, 11) radial über einer sich zwischen beiden Rippen (10, 11) erstreckenden Deckbandfläche (12) hinaus erhaben angeordnet ist.

6. Kühlsystem nach Anspruch 5, **dadurch gekennzeichnet, dass** die mit Deckband versehenen Spitzen der Schaufeln (1) so ausgeführt und angeordnet sind, dass die Deckbänder (7) zweier benachbarter Schaufeln (1) in Umfangsrichtung aneinander angrenzen, so dass die Deckbänder (7) aller Schaufeln (1) in der mindestens einen Schaufelreihe zusammen mindestens einen radial nach außen gerichteten ringförmigen, sich zwischen den Rippen befindenden Hohlraum (13) bilden, der radial durch die stationäre Komponente (4) begrenzt wird.

7. Kühlsystem nach Anspruch 5 oder 6, **dadurch gekennzeichnet, dass** die offene Kontur des Durchlasses (9) einen trichterförmigen Querschnitt in Radial- und Umfangsrichtung bereitstellt, wobei der trichterförmige Querschnitt eine zugeordnete Trichterachse (18) aufweist, die in Umfangsdrehrichtung tendiert.

8. Kühlsystem nach Anspruch 7, **dadurch gekennzeichnet, dass** jeder Durchlass (9) der mit Deckband versehenen Schaufelspitze eine Öffnungskontur bereitstellt, die eine Verlängerung in Axial-, Radial- und Umfangsrichtung hat, derart, dass ein Strömungsquerschnitt des Durchlasses (9) in Strömungsrichtung der in den Durchlass (9) eintretenden Kühlluft größer wird.

9. Kühlsystem nach Anspruch 7 oder 8, **dadurch gekennzeichnet, dass** die offene Kontur jedes Durchlasses (9) zwischen zwei oder mehr benachbarten Schaufeln verläuft.

10. Kühlsystem nach einem der Ansprüche 4 bis 9, **dadurch gekennzeichnet, dass** der Austrittsdurchlass der mindestens einen Öffnung eine zugeordnete Achse aufweist, die radial ausgerichtet ist.

11. Kühlsystem nach einem der Ansprüche 4 bis 10, **dadurch gekennzeichnet, dass** die drehende Strömungsmaschine eine Gas- oder Dampfturbomaschine oder eine Verdichtereinheit ist.

## Revendications

1. Procédé pour refroidir des aubes (1) d'au moins une rangée d'aubes dans une turbomachine rotative, comprenant un canal d'écoulement axial (2) qui est limité radialement à l'intérieur par une unité de rotor (3) et à l'extérieur par au moins un composant stationnaire (4), lesdites aubes (1) étant disposées au niveau de l'unité rotative (3) et présentant une pointe d'aube carénée tournée radialement vers ledit composant stationnaire (4), de l'air de refroidissement sous pression (8) étant acheminé depuis radialement à l'extérieur vers la pointe de chacune desdites aubes (1) dans l'au moins une rangée d'aubes, **caractérisé en ce que** ledit air de refroidissement sous pression (8) pénètre dans les aubes (1) à travers au moins une ouverture (9) au niveau de l'extrémité carénée des aubes.

2. Procédé selon la revendication 1, **caractérisé en ce que** l'air de refroidissement sous pression (8) est acheminé à travers le composant stationnaire (4), entourant radialement ladite au moins une rangée d'aubes et entrant dans une cavité (13) formée par le composant stationnaire (4) et les pointes carénées des aubes (1) dans l'au moins une rangée d'aubes.

3. Procédé selon la revendication 2, **caractérisé en ce que** l'air de refroidissement sous pression (8) est acheminé dans la cavité (13) à travers au moins une ouverture (14) du côté du composant stationnaire (4) de telle sorte qu'une pression statique règne à l'intérieur de ladite cavité (13), laquelle est supérieure à une pression totale relative d'un écoulement dans le canal d'écoulement axial (2) au niveau d'un bord d'attaque (15) des aubes (1) dans l'au moins une rangée d'aubes.

4. Système de refroidissement pour refroidir des aubes (1) d'au moins une rangée d'aubes dans une turbomachine rotative, comprenant un canal d'écoulement axial (2) qui est limité radialement à l'intérieur par une unité de rotor (3) et à l'extérieur par au moins un composant stationnaire (4), lesdites aubes (1) étant disposées au niveau de l'unité rotative (3) et présentant une pointe d'aube carénée tournée radialement vers ledit composant stationnaire (4) et au moins une ouverture (14) étant disposée au niveau du composant stationnaire (4) tourné radialement vers les pointes carénées des aubes (1) de l'au moins une rangée d'aubes, ladite au moins une ouverture (14) étant un orifice de sortie d'un canal de refroidissement à l'intérieur du composant stationnaire (4) **caractérisé en ce que** chacune des aubes (1) présente au moins une ouverture (9) au niveau de sa pointe d'aube carénée, et ladite ouverture (9) est un orifice d'entrée d'un canal de refroidissement (17) à l'intérieur de l'aube (1).

5. Système de refroidissement selon la revendication 4, **caractérisé en ce que** les pointes carénées des aubes (1) sont conçues et disposées de telle sorte que le carénage (7) de chaque aube (1) fournisse un bord amont et un bord aval (7', 7") par rapport à une direction d'écoulement axial (F) à travers ledit canal d'écoulement axial (2) de la turbomachine rotative, et le long dudit bord amont et dudit bord aval (7', 7'') est disposée au moins une ailette (10, 11), faisant saillie radialement au-delà d'une surface de carénage (12) s'étendant entre les deux ailettes (10, 11).

6. Système de refroidissement selon la revendication 5, **caractérisé en ce que** les pointes carénées des aubes (1) sont conçues et disposées de telle sorte que des carénages (7) de deux aubes adjacentes (1) se rejoignent mutuellement dans une direction circonférentielle de telle sorte que les carénages (7) de toutes les aubes (1) dans l'au moins une rangée d'aubes se combinent pour former au moins une cavité (13) entre ailettes de forme annulaire orientée radialement vers l'extérieur et bordée radialement par le composant stationnaire (4).

7. Système de refroidissement selon la revendication 5 ou 6, **caractérisé en ce que** le contour d'ouverture de l'ouverture (9) présente une section transversale en forme d'entonnoir dans la direction radiale et circonférentielle, ladite section transversale en forme d'entonnoir présentant un axe d'entonnoir désigné (18) tendant dans la direction circonférentielle de rotation.

8. Système de refroidissement selon la revendication 7, **caractérisé en ce que** chaque ouverture (9) de la pointe d'aube carénée présente un contour d'ouverture ayant une extension dans la direction axiale, radiale et circonférentielle de telle sorte qu'une section transversale d'écoulement de ladite ouverture (9) devienne plus grande dans la direction d'écoulement de l'air de refroidissement entrant dans l'ouverture (9).

9. Système de refroidissement selon la revendication 7 ou 8, **caractérisé en ce que** le contour d'ouverture de chaque ouverture (9) s'étend entre deux ou plus de deux aubes adjacentes.

10. Système de refroidissement selon l'une quelconque des revendications 4 à 9, **caractérisé en ce que** l'orifice de sortie de l'au moins une ouverture présente un axe désigné qui est orienté radialement.

11. Système de refroidissement selon l'une quelconque des revendications 4 à 10, **caractérisé en ce que** la turbomachine rotative est une unité de compresseur ou une turbomachine à gaz ou à vapeur.
